# DEMANDE DE BREVET EUROPEEN

(11) **EP 0 923 206 A1**
(43) Date de publication de la demande: **16.06.1999**
(21) Numéro de dépôt: 98403025.4
(22) Date de dépôt: 03.12.1998
(51) Int. Cl.: H04L 7/00, H04J 3/16, H04B 7/26, H04J 3/07

(54) **Trame de transmission de données de longueur variable et dispositifs d'émission et de réception de telles trames**

(30) Priorité: 10.12.1997 FR 9715653
(71) Demandeur: ALCATEL, 75008 Paris (FR)
(72) Inventeur: Dupuy, Pierre, 75017 Paris (FR)
(74) Mandataire: El Manouni, Josiane

(57) **Abrégé**

Cette trame de transmission de données de longueur variable, comportant une partie dite fixe (A), de longueur fixe, et une partie dite variable (B), de longueur variable, permettant de réaliser un alignement temporel entre un dispositif d'émission et un dispositif de réception de telles trames, est essentiellement caractérisée en ce que ladite partie variable (B) est réservée à la transmission de données dont la transmission n'est pas nécessaire dans chaque trame.

## Description

La présente invention concerne les techniques de transmission de données, plus particulièrement les techniques de transmission de données selon lesquelles les données transmises sont structurées en blocs indépendants, ou trames.

La présente invention est notamment applicable, dans les réseaux de radiocommunications mobiles tels que notamment le réseau GSM (pour : "Global System for Mobile Communication"), aux trames dites TRAU (pour : "Transcoder / Rate Adapter Unit") transmises entre des stations de base (communiquant avec des stations mobiles par voie radio), et des dispositifs appelés transcodeurs effectuant une conversion de débit entre le débit utilisé sur la voie radio et le débit utilisé sur des liaisons filaires dans ces réseaux.

De telles trames transportent, de manière connue, outre des données utiles, des données dites ici auxiliaires, telles que notamment des données de synchronisation, de contrôle, ...etc.

Un type particulier de données auxiliaires est par ailleurs constitué par des bits dits de bourrage destinés, suivant une technique connue, à réaliser une adaptation de rythme entre un équipement émetteur et un équipement récepteur de telles trames, soit en supprimant ces bits de bourrage lorsqu'il s'agit de rattraper un retard de l'équipement émetteur par rapport à l'équipement récepteur, soit au contraire en ajoutant des bits de bourrage supplémentaires lorsqu'il s'agit de rattraper un retard de l'équipement récepteur par rapport à l'équipement émetteur.

Une telle technique d'adaptation de rythme, dite aussi d'alignement temporel, pose un problème d'efficacité de ces trames, car elle oblige à réserver des ressources de transmission pour la transmission de données qui ne sont constituées que par des bits de bourrage, donc non porteurs d'information.

La présente invention a notamment pour but d'apporter une solution à ce problème.

Un des objets de la présente invention consiste ainsi dans une trame de transmission de données de longueur variable, comportant une partie dite fixe, de longueur fixe, et une partie dite variable, de longueur variable, permettant de réaliser un alignement temporel entre un dispositif d'émission et un dispositif de réception de telles trames, cette trame étant essentiellement caractérisée en ce que ladite partie variable est réservée à la transmission de données dont la transmission n'est pas nécessaire dans chaque trame.

La présente invention a également pour objet un dispositif d'émission et un dispositif de réception de telles trames.

D'autres objets et caractéristiques de la présente invention apparaîtront à la lecture de la description suivante d'exemples de réalisation, faite en relation avec les dessins ci-annexés dans lesquels:
- la figure 1 est un diagramme destiné à illustrer des trames de longueur variable,
- la figure 2 est un schéma de principe d'un dispositif d'émission de trames suivant l'invention,
- la figure 3 est un schéma de principe d'un dispositif de réception de trames suivant l'invention.

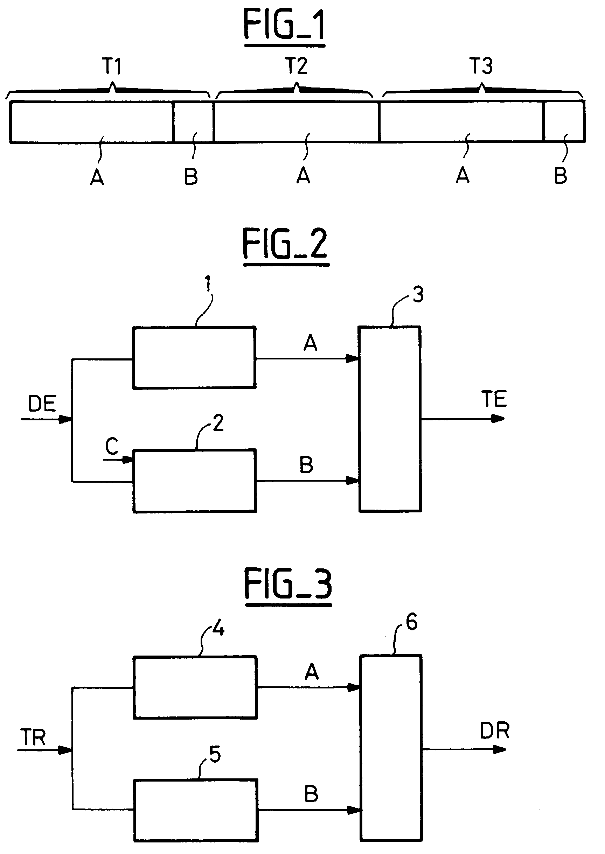

Sur la figure 1 sont illustrées à titre d'exemple trois trames consécutives de longueur variable, notées T1, T2, T3.

Ces trames comportent une partie fixe, notée A, de longueur fixe, et une partie variable, notée B, de longueur variable, permettant de réaliser un alignement temporel entre un dispositif d'émission et un dispositif de réception de telles trames, cette partie variable B étant à titre d'exemple présente dans la première et dans la troisième de ces trames, dites de ce fait trames de longueur normale, et supprimée dans la deuxième de ces trames, dite de ce fait trame de longueur réduite.

La partie fixe A est utilisée pour transmettre des données utiles et des données auxiliaires, parmi lesquelles, notamment, des données de synchronisation permettant de reconnaître le début des trames.

Suivant l'invention, la partie variable B est réservée à la transmission de données dont la transmission n'est pas nécessaire dans chaque trame.

Les exemples de réalisation donnés dans ce qui suit correspondent plus particulièrement, à titre d'exemple, aux trames TRAU transmises, comme rappelé plus haut, dans un réseau de radiocommunications mobiles tel que notamment le réseau GSM, entre des stations de base et des dispositifs appelés transcodeurs, mais on comprendra que l'invention n'est pas limitée à une telle application.

On rappelle que certaines des données auxiliaires transmises dans les trames TRAU sont constituées par des données de commandes d'alignement temporel. Plus précisément, des commandes d'alignement temporel sont transmises dans le sens montant, à savoir des stations de base vers les transcodeurs, pour réaliser un alignement temporel dans le sens descendant, à savoir des transcodeurs vers les stations de base.

Suivant un premier exemple de réalisation de l'invention, ladite partie variable est réservée, dans les trames montantes, a la transmission de telles données de commande d'alignement temporel.

La transmission de telles données de commande d'alignement temporel n'est en effet pas nécessaire dans chaque trame. En effet, une commande d'alignement temporel ne se produit au maximum que toutes les "n" trames (avec à titre d'exemple "n" égal à 125 pour le cas du système GSM).

On rappelle en outre que d'autres données auxiliaires transmises dans les trames TRAU sont constituées par des données destinées à indiquer un mode de transmission particulier constitué par le mode DTX (pour : "Discontinuous Transmission").

On rappelle brièvement que la technique dite de transmission discontinue, destinée notamment à réduire le niveau d'interférence dans un système cellulaire tel que le système GSM par exemple, consiste à ne transmettre aucune information en l'absence d'activité vocale, si ce n'est un bruit dit de confort, dont le débit est très inférieur à celui des informations de parole.

On rappelle en outre que le mode DTX peut être utilisé de manière indépendante pour chaque sens de transmission, et que pour le sens descendant un transcodeur doit être prévenu par une station de base du mode de transmission à appliquer.

Suivant un deuxième exemple de réalisation de l'invention, ladite partie variable est réservée, dans les trames montantes, à la transmission de telles données d'indication de mode de transmission discontinue, la transmission de telles données d'indication de mode DTX n'étant en effet pas non plus nécessaire dans chaque trame.

On rappelle en outre qu'il est connu de classer les bits de données utiles transmis dans les trames TRAU, selon qu'ils sont plus ou moins significatifs, et de transmettre les bits les plus significatifs (dits aussi bits de classe IA, ou de classe IB) avec une protection contre les erreurs de transmission plus efficace que pour les bits les moins significatifs (dits aussi bits de classe II).

Suivant un troisième exemple de réalisation de l'invention, ladite partie variable est réservée à la transmission de tels bits de données utiles les moins significatifs.

La transmission de tels bits de données utiles les moins significatifs n'est en effet pas non plus nécessaire dans chaque trame. Il apparaît en effet que la suppression de ces bits n'entraîne pour l'utilisateur qu'un désagrément extrêmement réduit, voire inaudible.

Eventuellement, pour minimiser ce désagrément, on pourra ne supprimer, en émission, que des bits de valeur prédéterminée, que l'on pourra alors réintroduire, en réception, suivant une convention entre émetteur et récepteur. Ceci sera aussi appelé par la suite quatrième exemple de réalisation.

Ces différents exemples de réalisation ne sont évidemment pas limitatifs, et on comprendra qu'il n'est pas possible d'en donner ici une liste exhaustive.

La figure 2 illustre un schéma de principe d'un dispositif d'émission de trames suivant l'invention.

Un tel dispositif d'émission comporte essentiellement:
- des moyens 1 d'élaboration de partie fixe A des trames à transmettre, à partir de données incidentes, notées DE,
- des moyens 2 d'élaboration de partie variable B des trames à transmettre, à partir desdites données incidentes, et de commandes d'alignement temporel pour le sens de transmission considéré, notées C,
- des moyens 3 d'élaboration des trames à transmettre, notées TE, à partir des parties fixes et variables ainsi élaborées.

Pour chaque trame à transmettre, les moyens 2 d'élaboration de partie variable fonctionnent par exemple, pour lesdits premier et deuxième exemples de réalisation, de la manière suivante.

Si les commandes d'alignement temporel reçues par les moyens 2 sont telles qu'un alignement temporel est effectivement à réaliser, et si les données à transmettre dans ladite partie variable, reconnues par les moyens 2 dans lesdites données incidentes, sont telles qu'aucune nouvelle valeur de ces données n'est à transmettre, alors une trame de longueur réduite peut être transmise pour réaliser ledit alignement temporel.

Inversement, si les commandes d'alignement temporel sont telles qu'aucun alignement temporel n'est effectivement à réaliser, et si les données à transmettre dans ladite partie variable sont telles qu'une nouvelle valeur de ces données est à transmettre, alors une trame de longueur normale peut être utilisée pour transmettre cette nouvelle valeur.

Si les commandes d'alignement temporel sont telles qu'un alignement temporel est effectivement à réaliser, et si en même temps les données à transmettre dans ladite partie variable sont telles qu'une nouvelle valeur de ces données est à transmettre, alors on pourra, selon le cas:
- soit donner la priorité à la transmission de ladite nouvelle valeur dans ladite partie variable, la trame transmise étant alors une trame de longueur normale,
- soit donner la priorité à la réalisation de l'alignement temporel, en transmettant alors une trame de longueur réduite.

Dans ce dernier cas, ladite nouvelle valeur pourra être transmise dans une trame suivante de longueur normale. En outre, dans le premier exemple de réalisation, la transmission de ladite nouvelle valeur dans une trame suivante de longueur normale pourra être commandée suite à une nouvelle détection, par le dispositif de réception associé, dans un même équipement, au dispositif d'émission considéré, de la nécessité de réaliser un alignement temporel, cette nouvelle détection faisant elle-même suite au fait que la priorité n'a pas été donnée précédemment à la réalisation de l'alignement temporel.

D'une manière générale, le fonctionnement des moyens 2 d'élaboration de partie variable des trames à transmettre et la manière dont ils arbitrent les conflits éventuels entre d'une part la réalisation, sans retard, de l'alignement temporel, et d'autre part la transmission, sans retard ou sans perte d'information, des données contenues dans ladite partie variable, dépend essentiellement du type de données transmises dans cette partie variable. On comprendra qu'il n'est pas possible ici d'envisager tous les cas de figure possibles correspondant à tous les types de données possibles. On se limitera par conséquent aux exemples de réalisation décrits.

Ainsi, pour ledit premier exemple de réalisation, la priorité en cas de conflit pourra par exemple être donnée à la transmission, dans les trames montantes, d'une nouvelle valeur de commande d'alignement temporel pour le sens descendant.

Pour ledit deuxième exemple de réalisation, la priorité pourra par exemple être donnée à la réalisation de l'alignement temporel, compte tenu du fait que les données d'indication de mode de transmission discontinue changent très peu souvent de valeur, et compte tenu du fait qu'en réception un filtrage des valeurs reçues peut en outre avantageusement être effectué, ainsi qu'il sera vu ultérieurement.

Pour le troisième et le quatrième exemple de réalisation, on pourra, dans tous les cas de figure, donner la priorité à la réalisation de l'alignement temporel, sachant que, comme indiqué plus haut, la suppression de bits de données utiles les moins significatifs affecte peu le confort d'écoute de l'utilisateur. Simplement, dans le quatrième exemple de réalisation, on pourra attendre, pour réaliser l'alignement temporel, que se présentent des trames dans lesquelles les bits de données utiles les moins significatifs ont lesdites valeurs prédéterminées, puisque le dispositif de réception peut alors, par convention, les réintroduire, afin d'éviter les éventuels inconvénients qui résulteraient de la perte d'information correspondante.

Par ailleurs, le nombre de trames de longueur réduite à transmettre pour réaliser un alignement temporel peut être fonction de la valeur de cet alignement temporel, et de même le nombre de trames de longueur normale à utiliser pour transmettre une nouvelle valeur des données à transmettre dans ladite partie variable peut, notamment dans ledit premier exemple, être fonction de cette valeur.

La figure 3 illustre un schéma de principe d'un dispositif de réception de trames suivant l'invention.

Un tel dispositif de réception comporte essentiellement:
- des moyens 4 pour extraire les données contenues dans la partie fixe A des trames incidentes reçues, notées TR,
- des moyens 5 pour détecter si les trames reçues sont des trames de longueur normale ou des trames de longueur réduite, et pour extraire les données contenues dans la partie variable B de trames reçues détectées de longueur normale,
- des moyens 6 pour fournir des données sortantes, notées DR, à partir des données ainsi extraites par les moyens 4 et par les moyens 5.

Suivant un exemple, plus particulièrement applicable au premier ou au troisième ou quatrième exemple de réalisation, les moyens 5 sont des moyens pour détecter si chaque trame reçue est une trame de longueur normale ou une trame de longueur réduite, et pour extraire les données contenues dans la partie variable de trames reçues détectées de longueur normale.

Pour le quatrième exemple de réalisation, les moyens 5 comportent en outre des moyens pour, dans le cas de trame reçue détectée de longueur réduite, réintroduire des bits de données utiles de valeur prédéterminée à la place des bits de données utiles non transmis, suivant une convention avec le dispositif d'émission correspondant, comme indiqué plus haut.

Les moyens pour détecter si une trame reçue est une trame de longueur normale ou une trame de longueur réduite peuvent par exemple comporter des moyens pour compter le nombre de bits d'une trame, reçus entre les données de synchronisation de cette trame et les données de synchronisation de la trame suivante.

Suivant un autre exemple, plus particulièrement applicable au deuxième exemple de réalisation, ou plus généralement au cas où les changements de valeur des données transmises dans ladite partie variable ne sont pris en compte qu'après réception de X valeurs identiques, les moyens 5 sont des moyens pour détecter si une trame reçue toutes les X trames est une trame de longueur normale ou une trame de longueur réduite, les données extraites de la partie variable des trames reçues détectées de longueur normale étant alors considérées comme également transmises dans la partie variable de X trames incluant ces trames reçues détectées de longueur normale. Ceci correspond au filtrage mentionné précédemment. On notera que ceci présente en outre l'avantage de fournir une protection contre les erreurs de transmission des données transmises dans cette partie variable.

Dans la description qui précède, il n'a été considéré que le cas de trames de longueur réduite, mais il est bien évident que lesdites trames de longueur variable peuvent aussi , suivant le sens de l'alignement temporel à réaliser, être des trames de longueur accrue, par adjonction de bits de bourrage.

En outre, comme déjà indiqué, l'invention n'est pas limitée à son application aux trames TRAU. Elle n'est pas non plus limitée, dans le cas des trames TRAU, aux exemples de réalisation donnés correspondant aux différents exemples considérés de données transmises dans ladite partie variable des trames.

## Revendications

1. Trame de transmission de données de longueur variable, comportant une partie dite fixe (A), de longueur fixe, et une partie dite variable (B), de longueur variable, permettant de réaliser un alignement temporel entre un dispositif d'émission et un dispositif de réception, caractérisée en ce que ladite partie variable (B) est réservée à la transmission de données dont la transmission n'est pas nécessaire dans chaque trame.

2. Trame selon la revendication 1, caractérisée en ce que lesdites données dont la transmission n'est pas nécessaire dans chaque trame comportent des données de commande d'alignement temporel pour le sens de transmission opposé dans le cas d'une transmission bidirectionnelle.

3. Trame selon la revendication 1, caractérisée en ce que lesdites données dont la transmission n'est pas nécessaire dans chaque trame comportent des données d'indication d'un mode de transmission particulier constitué par le mode de transmission discontinue.

4. Trame selon la revendication 1, caractérisée en ce que lesdites données dont la transmission n'est pas nécessaire dans chaque trame comportent des bits de données utiles les moins significatifs.

5. Trame selon la revendication 1, caractérisée en ce que lesdites données dont la transmission n'est pas nécessaire dans chaque trame comportent des valeurs prédéterminées de bits de données utiles les moins significatifs.

6. Dispositif d'émission de trames suivant l'une des revendications 1 à 5, caractérisé en ce qu'il comporte:
- des moyens (1) d'élaboration de partie fixe desdites trames à transmettre, à partir de données incidentes (DE),
- des moyens (2) d'élaboration de partie variable des trames à transmettre, à partir desdites données incidentes et de commandes d'alignement temporel (C) pour le sens de transmission considéré,
- des moyens (3) d'élaboration des trames a transmettre (TE), à partir desdites parties fixes et variables ainsi élaborées.

7. Dispositif de réception de trames suivant l'une des revendications 1 à 5, caractérisé en ce qu'il comporte:
- des moyens (4) pour extraire les données contenues dans la partie fixe de trames incidentes reçues (TR),
- des moyens (5) dits de détection et d'extraction, pour détecter si les trames reçues sont des trames de longueur normale ou des trames de longueur réduite, et pour extraire les données contenues dans la partie variable de trames reçues détectées de longueur normale,
- des moyens (6) pour fournir des données sortantes (DR), à partir des données ainsi extraites.

8. Dispositif de réception selon la revendication 7, pour la réception de trames selon la revendication 5, caractérisé en ce que lesdits moyens (5) de détection et d'extraction comportent en outre des moyens pour, dans le cas de détection de trames reçues de longueur réduite, réintroduire des bits de données utiles ayant lesdites valeurs prédéterminées, à la place des bits de données utiles non transmis dans ces trames.
